# EUROPEAN PATENT SPECIFICATION

(11) **EP 3 712 539 B1**
(45) Date of publication and mention of the grant of the patent: **07.06.2023**
(21) Application number: 18877959.9
(22) Date of filing: 15.11.2018
(51) Int. Cl.: F24H 9/00, F24H 8/00, F24H 1/36, F24H 1/28, F28D 7/10, F28D 7/16, F28F 9/22, F24H 9/16, F24H 9/17, F28D 21/00, F28F 17/00, F28F 19/00

(54) **CONDENSATE COLLECTOR AND HEAT EXCHANGER USING SAME**
KONDENSATSAMMLER UND WÄRMETAUSCHER MIT VERWENDUNG DAVON
COLLECTEUR DE CONDENSAT ET ÉCHANGEUR DE CHALEUR UTILISANT CELUI-CI

(30) Priority: 16.11.2017 KR 20170152684
(43) Date of publication of application: 23.09.2020
(73) Proprietor: Kyungdong Navien Co., Ltd., Pyeongtaek-si, Gyeonggi-do 17704 (KR)
(72) Inventor: KIM, Dae Hyun, Seoul 08501 (KR); KIM, Jeong Woo, Seoul 08501 (KR)
(74) Representative: Meissner Bolte Partnerschaft mbB
(86) International application number: PCT/KR2018/014032
(87) International publication number: WO 2019/098719

(56) References cited:
- EP-A1- 2 806 231
- WO-A1-2014/142688
- DE-U1- 29 510 477
- KR-A- 20050 036 152
- KR-A- 20110 084 725
- KR-A- 20110 084 725
- KR-A- 20110 084 726
- KR-A- 20130 085 090
- KR-A- 20140 083 626
- US-A1- 2012 138 278

## Description

### [Technical Field]

The present invention relates to a condensate receiver and a heat exchanger using the same.

### [Background Art]

A condensing heat exchanger is a heat exchanger that heats heating water using both sensible heat of a heat source and latent heat generated when combustion gas heated by the heat source experiences a phase change. Accordingly, condensate is generated by the phase change of the combustion gas.

Various kinds of oxide ions contained in the combustion gas are melted in the condensate. Therefore, the condensate is an acidic solution generally having a high acidity. Because the condensate should not be drained simply, the condensate and the combustion gas are generally collected and thereafter released to the outside through predetermined treatment.

In a shell-and-tube type condensing heat exchanger, condensate generated as described above moves downward and falls by its own weight. Therefore, a condensate receiver may be formed in the lowermost position of the heat exchanger.

The condensate falls in the form of a condensed water droplet and strikes the condensate receiver. Accordingly, the condensate receiver vibrates like when a person hits a drum with a drumstick, and noise is generated by the vibration.

To reduce the vibration and noise, the condensate receiver may be formed of a high strength material, or the thickness of the condensate receiver may be increased. However, both the cases may cause an economic problem, and in the case of increasing the thickness of the condensate receiver, the weight of the heat exchanger may be excessively increased, and therefore the heat exchanger may not be easy to treat.

### [Disclosure]

### [Technical Problem]

The present invention has been made to solve the above-mentioned problems occurring in the prior art. An aspect of the present invention provides a condensate receiver for improving noise and vibration generated when condensate falls, and a heat exchanger using the same.

### [Technical Solution]

A condensate receiver according to an embodiment of the present invention includes a receiving part formed in a circular shape, in which an outlet of a flue is disposed above the receiving part, and the receiving part is formed in a multi-stage structure to have an increasing separation distance downward from the outlet of the flue with an approach to the inside in a radial direction and receives condensate and combustion gas released by the flue, and a condensate passage that extends outward from the center of the receiving part in the radial direction and that connects the inside of the receiving part and the outside of the receiving part to drain the condensate.

A shell-and-tube type heat exchanger according to an embodiment of the present invention includes an outer container having openings at opposite ends thereof and an empty space therein, the empty space being connected to the openings at the opposite ends, a combustion chamber that covers an opening at an upper end of the outer container and provides an interior space for locating a heat source, a lower tube plate that is spaced apart downward from the combustion chamber and that covers an opening at a lower end of the outer container, a plurality of flues provided in the empty space of the outer container to guide combustion gas generated from the heat source from the combustion chamber to the outside of the lower tube plate, and a condensate receiver including a receiving part that is formed in a multi-stage structure to have an increasing separation distance downward from the lower tube plate with an approach to the inside in a radial direction and that receives combustion gas released from the flues and condensate generated from the combustion gas.

### [ Advantageous Effects]

Accordingly, noise and vibration generated when condensate falls and strikes the condensate receiver may be reduced.

Noise and vibration generated when combustion gas is released may be reduced.

### [ Description of Drawings]

FIG. 1 is a vertical sectional perspective view of a shell-and-tube type heat exchanger according to an embodiment of the present invention.
FIG. 2 is an exploded perspective view of the shell-and-tube type heat exchanger according to the embodiment of the present invention.
FIG. 3 is a vertical sectional view of the shell-and-tube type heat exchanger according to the embodiment of the present invention.
FIG. 4 is a vertical sectional view obtained by cutting the shell-and-tube type heat exchanger according to the embodiment of the present invention. with a plane perpendicular to FIG. 3.
FIG. 5 is a perspective view of a condensate receiver according to another embodiment of the present invention.

### [ Mode for Invention]

Hereinafter, some embodiments of the present invention will be described in detail with reference to the exemplary drawings. In adding the reference numerals to the components of each drawing, it should be noted that the identical or equivalent component is designated by the identical numeral even when they are displayed on other drawings. Further, in describing the embodiment of the present invention, a detailed description of well-known features or functions will be ruled out in order not to unnecessarily obscure the gist of the present invention.

In describing the components of the embodiment according to the present invention, terms such as first, second, "A", "B", (a), (b), and the like may be used. These terms are merely intended to distinguish one component from another component, and the terms do not limit the nature, sequence or order of the components. When a component is described as "connected", "coupled", or "linked" to another component, this may mean the components are not only directly "connected", "coupled", or "linked" but also are indirectly "connected", "coupled", or "linked" via a third component.

Hereinafter, a condensate receiver 60 and a shell-and-tube type heat exchanger 1 including the same according to an embodiment of the present invention will be described with reference to the accompanying drawings. Similar condensate receiving structures are disclosed in KR 10-2011-0084725 A, EP 2806231 A1, US 2012/138278 A1, DE 29510477 U1, WO 2014/142688 A1.

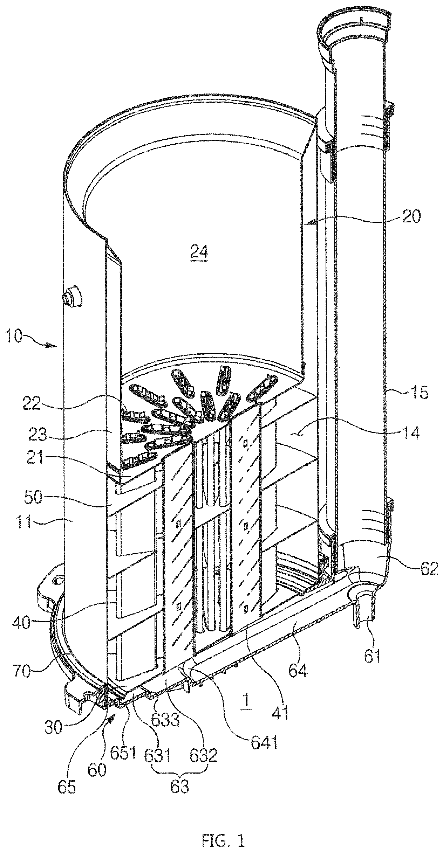

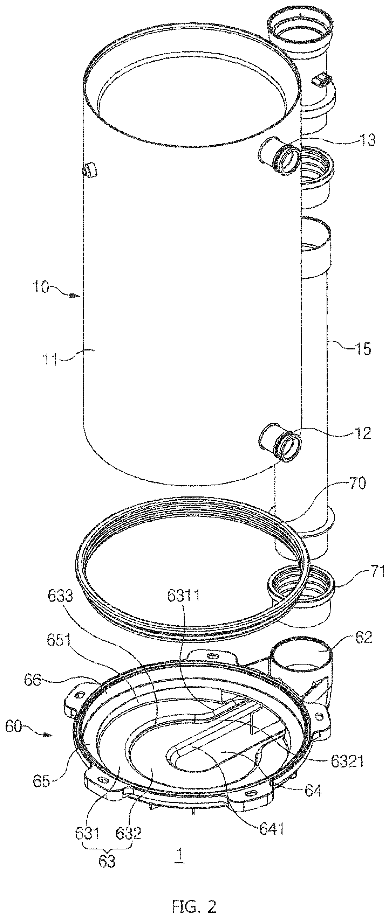

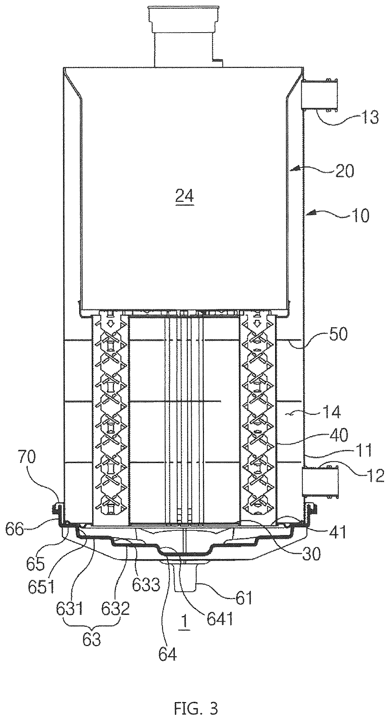

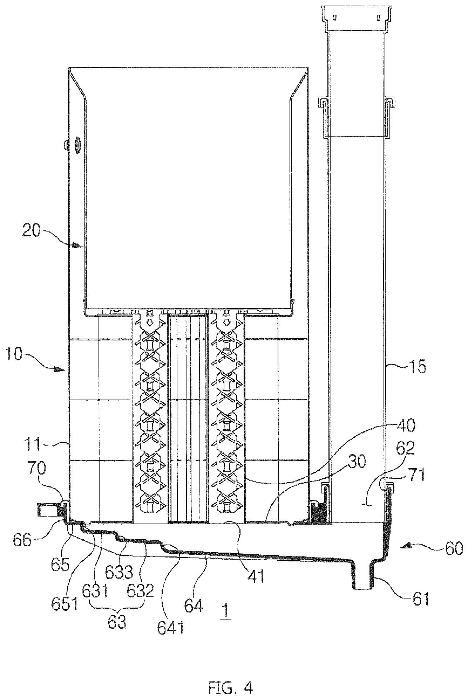

FIG. 1 is a vertical sectional perspective view of the shell-and-tube type heat exchanger 1 according to the embodiment of the present invention. FIG. 2 is an exploded perspective view of the shell-and-tube type heat exchanger 1 according to the embodiment of the present invention. FIG. 3 is a vertical sectional view of the shell-and-tube type heat exchanger 1 according to the embodiment of the present invention. FIG. 4 is a vertical sectional view obtained by cutting the shell-and-tube type heat exchanger 1 according to the embodiment of the present disclosure with a plane perpendicular to FIG. 3.

Referring to the drawings, the shell-and-tube type heat exchanger 1 according to the embodiment of the present disclosure includes an outer container 10, a combustion chamber 20, a lower tube plate 30, flues 40, and the condensate receiver 60.

The outer container 10 is a main body of the shell-and-tube type heat exchanger 1 that is formed in a cylindrical shape, and receives, in a cylindrical interior space 24 thereof, components constituting the shell-and-tube type heat exchanger 1.

Openings are formed at opposite ends of the outer container 10, an empty space 14 connected with the openings at the opposite ends is provided in the outer container 10, an inlet 12 through which heating water is introduced into the empty space 14 is provided on a lower side of the outer container 10, and an outlet 13 through which the heating water is drained from the empty space 14 is provided on an upper side of the outer container 10. The heating water introduced through the inlet 12 flows along the empty space 14 and is drained through the outlet 13. The heating water is heated by receiving thermal energy from the flues 40 and the combustion chamber 20 at high temperatures while flowing in the empty space 14. The heated heating water is drained through the outlet 13 and performs heating through a heating pipe of a boiler.

The outer container 10 may include an outer container extension 11 that vertically extends upward and downward and serves as a wall of the outer container 10, and is formed in a cylindrical shape in which an upper end and a lower end of the outer container extension 11 are open.

The opening at the upper end of the outer container 10 is covered by the combustion chamber 20. Here, the expression "the combustion chamber 20 covers the opening" may mean that, as illustrated in the drawings, the combustion chamber 20 completely covers, from the outside, the periphery of the opening located at the upper end of the outer container 10. However, the combustion chamber 20 may be expressed as covering the opening even though the combustion chamber 20 is coupled in such a manner that the combustion chamber 20 is inserted into the opening of the outer container 10 and is coupled to an inner circumferential surface of the empty space 14 of the outer container 10 to isolate the empty space 14 from the outside, with the periphery of the opening protruding toward the outside.

The combustion chamber 20 is a cylindrical component that covers the opening at the upper end of the outer container 10, and is a component in which a heat source for generating combustion gas that transfers heat to the heating water is disposed in the interior space 24 of the combustion chamber 20. The combustion chamber 20 is an inner container for locating, in the empty space 14 of the outer container 10, the heat source for generating the combustion gas through heating and provides the interior space 24 extending from the upper end of the outer container 10 toward the lower end thereof. The combustion chamber 20 formed in a cylindrical shape extends from the upper end of the outer container 10 toward the lower end of the outer container 10, but does not reach the lower end of the outer container 10. The heat source may be disposed in the interior space 24 of the combustion chamber 20 and may heat the combustion chamber 20 to transfer heat to the heating water. Furthermore, the heat source may generate combustion gas by heating gas received in the combustion chamber 20. The combustion gas generated by heating of the heat source may be released from the combustion chamber 20 to the outside through the flues 40. In this process, the combustion gas passing through the flues 40 may heat the heating water passing through the empty space 14.

A lower end of the combustion chamber 20 is covered by an upper tube plate 21. Upper tube plate through-holes 22 through which the flues 40, which will be described below, pass may be formed in the upper tube plate 21. The upper tube plate 21 may be removable from the combustion chamber 20, and the combustion chamber 20 and the upper tube plate 21 may be integrated with each other.

An upper end of the combustion chamber 20 may be formed to have a diameter corresponding to the upper end of the outer container 10 and may be coupled with the upper end of the outer container 10 to close the upper end of the outer container 10 to form the empty space 14 of the closed outer container 10. However, the diameter of a combustion chamber extension 23 extending from the upper end of the outer container 10 toward the lower end of the outer container 10 may be formed to be smaller than the diameter of the outer container 10. Accordingly, the combustion chamber 20 may have a tapered shape extending from the combustion chamber extension 23 to the upper end of the combustion chamber 20.

As the diameter of the combustion chamber extension 23 is formed to be smaller than the diameter of the outer container 10, a flow space may be formed between an inner circumferential surface of the outer container 10 and an outer circumferential surface of the combustion chamber 20. The heating water may flow from the empty space 14 through the flow space. The outlet 13 of the outer container 10 that is formed at the upper end of the outer container 10 may be connected to the flow space. Accordingly, the heating water flowing in the flow space may be drained through the outlet 13 of the outer container 10. The heating water flowing in the flow space finally receives heat from the combustion chamber 20 heated by the heat source and is drained through the outlet 13 formed on the outer container 10.

The plurality of flues 40 are tubular components disposed between the lower tube plate 30 and the combustion chamber 20 and connected with the interior space 24 of the combustion chamber 20 and a lower side of the lower tube plate 30. Accordingly, the plurality of flues 40 guide the combustion gas generated from the heat source from the interior space 24 of the combustion chamber 20 to the lower side of the lower tube plate 30 through the empty space 14 of the outer container 10. According to an embodiment of the present invention, the flues 40 vertically extend upward and downward. Accordingly, the heated combustion gas moves downward through the flues 40. In the process in which the combustion gas moves, heat exchange between the heating water moving upward through the empty space 14 of the outer container 10 and the combustion gas moving downward is performed through the flues 40.

The plurality of flues 40 may be radially disposed from the center of the circular cross-section of the outer container 10 and the combustion chamber 20. The center of the circular cross-section may be the same as the center of a diaphragm 50 in a circular plate shape that will be described below. Accordingly, as in an embodiment of the present invention, the flues 40 may be disposed along one circumference at predetermined intervals. However, the flues 40 may be disposed at predetermined intervals along two circumferences having different diameters and may be disposed in two stages, and the arrangement is not limited thereto.

In addition, the shell-and-tube type heat exchanger 1 according to the embodiment of the present invention may further include the diaphragm 50.

The diaphragm 50 is disposed in the empty space 14 of the outer container 10 that is formed in the outer container 10. The diaphragm 50 is a component formed in a circular plate shape and is disposed between the lower tube plate 30 and the combustion chamber 20 across the vertical up/down direction. Although the diaphragm 50 is disposed perpendicular to the vertical up/down direction in the embodiment of the present invention, the direction in which the diaphragm 50 is disposed is not limited thereto.

The diaphragm 50 may have through-holes that are formed in positions corresponding to the positions of the flues 40 and through which the flues 40 pass. As the diaphragm 50 divides the empty space 14 into a plurality of areas, the diaphragm 50 may form a flow passage through which the heating water flowing in the empty space 14 moves. As illustrated, a plurality of diaphragms 50 may be disposed to make the flow passage of the heating water more complex.

The lower tube plate 30 is a component that covers the lower end of the outer container 10. The empty space 14 is defined by the combustion chamber 20 covering the upper end of the outer container 10 and the lower tube plate 30 covering the lower end of the outer container 10. Accordingly, the lower tube plate 30 may divide the empty space 14 disposed in the outer container 10 from the outside. The lower tube plate 30 may have through-holes through which the plurality of flues 40, which will be described below, pass.

A packing 70 may be formed of an elastic material and may be formed to surround a lower end of an outer circumferential surface of the outer container 10. The packing 70 may be disposed between the outer circumferential surface of the outer container 10 and an inner circumferential surface 66 of the condensate receiver to maintain air-tightness of an inner area of the condensate receiver 60. The packing 70 having elasticity presses the outer circumferential surface of the outer container 10 inward and presses the inner circumferential surface 66 of the condensate receiver outward, thereby preventing combustion gas or condensate from escaping through the interface.

### Condensate receiver 60

The condensate receiver 60 is a component that receives and drains condensate and is located under the lower tube plate 30. Accordingly, the condensate receiver 60 may receive condensate that falls from a lower surface of the lower tube plate 30 or the insides of the flues 40.

The condensate receiver 60 may be coupled to the lower end of the outer container 10 while surrounding the outer circumferential surface of the outer container 10. At least a partial area of the inner circumferential surface 66 of the condensate receiver and an area adjacent to the lower end of the outer circumferential surface of the outer container 10 may be coupled, and the packing 70 may be disposed therebetween to firmly couple the condensate receiver 60 to the outer container 10.

A lower surface of a radially outward area of the lower tube plate 30 may be seated on a seating part 65, which is a radially outward partial area of an upper surface of the condensate receiver 60, to maintain air-tightness to prevent a space formed by an inner surface of the condensate receiver 60 and the lower tube plate 30 from being connected with the outside. As the lower surface of the radially outward area of the lower tube plate 30 and the seating part 65, which is a partial area of the upper surface of the condensate receiver 60, make contact with each other, condensate C or combustion gas G received in the condensate receiver 60 fails to pass therebetween.

The condensate receiver 60 includes a receiving part 63 to receive falling condensate and includes a condensate passage 64 to drain the received condensate.

### Receiving Part 63

The condensate receiver 60 according to the embodiment of the present invention includes the receiving part 63. The receiving part 63 is a component where condensate falls and settles, and includes surfaces of the condensate receiver 60 that are vertically spaced apart downward from the lower tube plate 30, among areas that the condensate receiver 60 includes.

As outlets 41 of the flues are formed in the lower tube plate 30, the receiving part 63 and the outlets 41 of the flues are vertically spaced apart from each other with a distance therebetween. A space is formed between the receiving part 63, the lower tube plate 30 spaced apart upward from the receiving part 63, and the outlets 41 of the flues, and condensate or combustion gas is received in the space and is released through a drain hole 61 and an exhaust hole 62 that are formed on an outer side.

The receiving part 63 is formed in a circular shape when viewed in the vertical direction and is formed in a multi-stage structure to have an increasing separation distance downward from the outlets 41 of the flues and the lower tube plate 30 with an approach to the inside in the radial direction. The receiving part 63 forms a multi-stage structure that has an increasing distance from the outlets 41 of the flues with an approach to the center like a funnel, but has a point where the separation distance suddenly increases rapidly.

As the receiving part 63 is formed in the multi-stage structure, the entire receiving part 63 does not serve as one large vibration surface, and separated stages serve as separate small-sized vibration surfaces. Accordingly, even though condensate falls and collides with the receiving part 63, less vibration and noise is generated than when the entire receiving part 63 is implemented with one surface. As the receiving part 63 is formed in the multi-stage structure, the vibration surfaces are divided from one another, and thus an effect of reinforcing the vibration surfaces is obtained.

A condensate receiver having a bottom surface that is not formed in a multi-stage structure, but has the same height as the lowermost bottom surface of the receiving part 63 according to an embodiment of the present invention may be considered. In the case of the condensate receiver, noise caused by condensate that falls freely and strikes the lowermost bottom surface may be greater than noise caused by condensate that falls freely and strikes the multi-staged bottom surface of the receiving part 63 according to the embodiment of the present disclosure. Furthermore, condensate may fall on a surface most adjacent to the lower tube plate 30 among surfaces of the receiving part 63 having the multi-stage structure according to the embodiment of the present invention and may be drained while flowing to a surface located farther away from the lower tube plate 30. Accordingly, the condensate may not fall on the lowermost bottom surface of the receiving part 63 at one time and may fall with a low head drop through the stages of the receiving part 63 or may flow in close contact with the receiving part 63, and due to this, noise and vibration may be reduced.

Specifically, the receiving part 63 according to the embodiment of the present invention may have a multi-stage structure that includes a first stage receiving surface 631 having an annular shape and a second stage receiving surface 632 that has an annular shape and that is disposed inward of the first stage receiving surface 631 in the radial direction so as to be located farther away from the outlets 41 of the flues in the lower direction than the first stage receiving surface 631 and is surrounded by the first stage receiving surface 631. As the receiving part 63 has the multi-stage structure, condensate falling on the first stage receiving surface 631 may flow down to the second stage receiving surface 632 by the gravity. In the embodiment of the present disclosure, the first stage receiving surface 631 and the second stage receiving surface 632, that is, a total of two receiving surfaces are formed. However, a multi-stage structure including a larger number of receiving surfaces may be formed.

As the first stage receiving surface 631 and the second stage receiving surface 632 are formed with a step, the first stage receiving surface 631 and the second stage receiving surface 632 may be connected through an intermediate receiving-surface wall vertically extending upward and downward. In an embodiment of the present invention, the first stage receiving surface 631 and the second stage receiving surface 632 are formed in a plate shape parallel to the horizontal plane, but the intermediate receiving-surface wall 633 extends along the vertical direction. Accordingly, the receiving part 63 has a step at the point where the intermediate receiving-surface wall 633 is located. The point where the first stage receiving surface 631 and the intermediate receiving-surface wall 633 are connected or the point where the second stage receiving surface 632 and the intermediate receiving-surface wall 633 are connected may be rounded.

Although the first stage receiving surface 631 and the second stage receiving surface 632 are formed in a plate shape parallel to the horizontal plane in the embodiment of the present invention, the first stage receiving surface 631 and the second stage receiving surface 632 may be obliquely formed to have an increasing separation distance downward from the lower tube plate 30 and the outlets 41 of the flues with an approach to the inside in the radial direction. When the receiving surfaces are obliquely formed to have an increasing separation distance with an approach to the inside in the radial direction, even though condensate falls and collides with the receiving surfaces, the condensate does not collide with the receiving surfaces in a perpendicular direction, and thus vibration and noise may be reduced. Furthermore, due to the inclination formed in the radially inward direction, condensate on the first stage receiving surface 631 may naturally flow to the second receiving surface 632, and the condensate on the second stage receiving surface 632 may easily flow into the condensate passage 64.

Furthermore, the first stage receiving surface 631 and the second stage receiving surface 632 may be obliquely formed to have an increasing separation distance downward from the lower tube plate 30 and the outlets 41 of the flues in the clockwise or counterclockwise direction along the circumferential direction. Accordingly, condensate on each receiving surface may flow in the clockwise or counterclockwise direction along the circumferential direction of the receiving surface and may flow to the next stage.

The first stage receiving surface 631 and the second stage receiving surface 632 according to an embodiment of the present invention may be formed in an unclosed annular shape in which an area in the direction in which the condensate passage 64 extends is formed in a cut-off form. The condensate passage 64, which will be described below, extends in a radially outward direction, and if the first stage receiving surface 631 and the second stage receiving surface 632 are formed even for an area facing the direction in which the condensate passage 64 extends, condensate, when falling on the area, may fall on the first stage receiving surface 631 or the second stage receiving surface 632 first without directly falling on the condensate passage 64. Therefore, to allow condensate to directly fall on the condensate passage 64 and flow away, the first stage receiving surface 631 and the second stage receiving surface 632 may not be formed for the area facing the direction in which the condensate passage 64 extends. In an embodiment of the present disclosure, the first stage receiving surface 631 is formed in an unclosed annular shape and has, in an area located in the direction in which the condensate passage 64 extends, first stage receiving surface end portions 6311 facing each other. The second stage receiving surface 632 is formed such that second stage receiving surface end portions 6321 further extending from an unclosed annular shape in the direction in which the condensate passage 64 extends exist.

The receiving part 63 may be located inward of the seating part 65 in the radial direction and has a larger separation distance downward from the lower tube plate 30 and the outlets 41 of the flues than the seating part 65. Accordingly, the lower tube plate 30 may make contact with the seating part 65 to maintain air-tightness of the space formed in the condensate receiver 60, but the receiving part 63 may form the space.

Because the receiving part 63 and the seating part 65 have different heights, a seating part inner wall 651 extending in the vertical direction may be formed between the seating part 65 and the receiving part 63 to form a stepped structure. Accordingly, the seating part inner wall 651 serves as an inner wall of the space formed in the condensate receiver 60.

### Condensate Passage 64

The condensate receiver 60 according to the embodiment of the present invention includes the condensate passage 64. The condensate passage 64 is a passage for draining condensate collected in the condensate receiver 60 to the outside.

The condensate passage 64 may be disposed to be surrounded by the receiving part 63, specifically, the second stage receiving surface 632. The condensate passage 64 is located inward of the second stage receiving surface 632 in the radial direction and is disposed in a position farther away from the outlets 41 of the flues in the lower direction than the second stage receiving surface 632. Furthermore, the condensate passage 64 may extend in a radially outward direction and may drain condensate in the direction.

The condensate passage 64 is disposed in a position farther away from the outlets 41 of the flues in the lower direction than the receiving part 63, and therefore a stepped structure may be formed at the point where the condensate passage 64 and the receiving part 63 meet. At the point where the condensate passage 64 and the receiving part 63 meet, a condensate passage wall 641 extends in the vertical direction to form a stepped structure of the condensate passage 64 and the receiving part 63. That is, the multi-stage structure of the condensate receiver 60 according to the embodiment of the present invention may be formed by adding the stepped structure formed by the condensate passage 64 and the seating part 65 to the stepped structure of the receiving part 63.

At the same time as extending in the radially outward direction, the condensate passage 64 may be obliquely formed to have an increasing separation distance downward from the lower tube plate 30 and the outlets 41 of the flues with an approach to the outside from the center in the radial direction. Accordingly, condensate may be drained along the condensate passage 64 in the radially outward direction by its own weight.

The drain hole 61 is a passage through which condensate is drained to the outside. The drain hole 61 may be located at a distal end in the direction in which the condensate passage 64 extends, and may be vertically formed in the lower direction so as to be connected with the outside such that the condensate is drained by its own weight.

The exhaust hole 62 is a passage through which combustion gas is released to the outside. The exhaust hole 62 may be located at the distal end in the direction in which the condensate passage 64 extends, and may be connected and formed in one direction such that the combustion gas is released. The exhaust hole 62 may be connected with a tubular duct 15 vertically extending upward and may release the combustion gas to the outside through the duct 15. The duct 15 and the exhaust hole 62 may be coupled through a duct packing 71 made of an elastic material to maintain sealing of the combustion gas. The duct 15 and the exhaust hole 62 may be firmly coupled by coupling the duct packing 71 to an inner circumferential surface of the exhaust hole 62 and coupling an outer circumferential surface of the duct 15 to an inner circumferential surface of the duct packing 71.

The exhaust hole 62 may be formed in a cylindrical shape. That is, the exhaust hole 62 and the duct 15 may be formed in a shape similar to a circular tube. Accordingly, the exhaust hole 62 has an annular cross-section. An exhaust hole having a cross-section similar to a triangle may be considered due to a problem in space utilization. In comparison with the exhaust hole, vibration caused by the released combustion gas is reduced on a sidewall of the exhaust hole 62 having a cylindrical shape. Accordingly, noise may also be reduced.

An apparatus capable of performing after-treatment on combustion gas to a degree that the combustion gas does not cause serious pollution even though released in the air may be disposed in the exhaust hole 62 or the duct 15.

### Support Rod 87

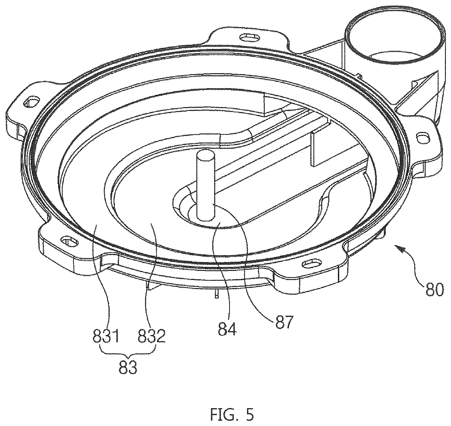

FIG. 5 is a perspective view of a condensate receiver 80 according to another embodiment of the present invention.

Referring to the drawing, the condensate receiver 80 according to the other embodiment of the present invention may further include the support rod 87 that vertically extends upward from the center of a receiving part 83 and that is coupled to the lower tube plate.

The support rod 87 is a component that supports the lower tube plate and the condensate receiver 80. The support rod 87 extends in the vertical direction. An upper end of the support rod 87 is coupled to the lower tube plate, and a lower end of the support rod 87 is coupled to the condensate receiver 80. In the other embodiment of the present invention, the support rod 87 is illustrated as being coupled to a condensate passage 84 that is the center of the condensate receiver 80. However, a plurality of support rods 87 may be formed on the receiving part 83.

The support rod 87 may minimize vibration of the condensate receiver 80 by supporting the lower tube plate and the condensate receiver 70. Furthermore, as the support rod 87 is disposed, the condensate receiver 80 may be coupled to the outer container and the lower tube plate well even without an additional arrangement of a separate support structure.

The support rod 87 may be formed of an elastic material. As the support rod 87 is formed of an elastic material, the support rod 87 may absorb vibration generated from the condensate receiver 80 well.

Hereinabove, even though all of the components are coupled into one body or operate in a combined state in the description of the above-mentioned embodiments of the present invention, the present invention is not limited to these embodiments. That is, all of the components may operate in one or more selective combination within the range of the purpose of the present disclosure. It should be also understood that the terms of "include", "comprise" or "have" in the specification are "open type" expressions just to say that the corresponding components exist and, unless specifically described to the contrary, do not exclude but may include additional components. Unless otherwise defined, all terms used herein, including technical and scientific terms, have the same meaning as those generally understood by those skilled in the art to which the present invention pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

Hereinabove, although the present invention has been described with reference to exemplary embodiments and the accompanying drawings, the present invention is not limited thereto, but may be variously modified and altered by those skilled in the art to which the present disclosure pertains without departing from the scope of the present invention as defined in the following claims.

## Claims

1. A condensate receiver (60) comprising:
a receiving part (63) formed in a circular shape, wherein an outlet (41) of a flue is disposed above the receiving part (63), and the receiving part (63) is formed in a multi-stage structure to have an increasing separation distance downward from the outlet (41) of the flue with an approach to the inside in a radial direction and receives condensate and combustion gas released by the flue; and
a condensate passage (64) extending outward from the center of the receiving part (63) in the radial direction,
wherein the condensate passage (64) is configured to connect the inside of the receiving part (63) and the outside of the receiving part (63) to drain the condensate.

2. The condensate receiver (60) of claim 1, wherein the receiving part (63) has the multi-stage structure including:
a first stage receiving surface (631) in an annular shape that is spaced apart downward from the outlet (41) of the flue and on which the condensate falls and settles; and
a second stage receiving surface (632) in an annular shape that is disposed inward of the first stage receiving surface (631) in the radial direction so as to be located farther away from the outlet (41) of the flue in a lower direction than the first stage receiving surface (631), wherein the second stage receiving surface (632) is surrounded by the first stage receiving surface (631) and is disposed to surround the condensate passage (64).

3. The condensate receiver (60) of claim 2, wherein the condensate passage (64) is located inward of the second stage receiving surface (632) in the radial direction and is disposed in a position farther away from the outlet (41) of the flue in the lower direction than the second stage receiving surface (632).

4. The condensate receiver (60) of claim 3, wherein the first stage receiving surface (631) and the second stage receiving surface (632) are formed in an unclosed annular shape in which an area in a direction in which the condensate passage (64) extends is formed in a cut-off form.

5. The condensate receiver (60) of claim 1, further comprising:
a drain hole (61) located at a distal end in a direction in which the condensate passage (64) extends, the drain hole (61) being vertically connected in a lower direction such that the condensate is drained by the weight thereof; and
an exhaust hole (62) located at the distal end in the direction in which the condensate passage (64) extends, the exhaust hole (62) being connected in one direction to release the combustion gas.

6. The condensate receiver (60) of claim 5, wherein the exhaust hole (62) is formed in a cylindrical shape.

7. A shell-and-tube type heat exchanger (1) comprising:
an outer container (10) having openings at opposite ends thereof and an empty space (14) therein, the empty space (14) being connected to the openings at the opposite ends;
a combustion chamber (20) configured to cover an opening at an upper end of the outer container (10) and provide an interior space (24) for locating a heat source;
a lower tube plate (30) spaced apart downward from the combustion chamber (20) and configured to cover an opening at a lower end of the outer container (10);
a plurality of flues provided in the empty space (14) of the outer container (10) to guide combustion gas generated from the heat source from the combustion chamber (20) to the outside of the lower tube plate (30); and
a condensate receiver (60) including a receiving part (63) formed in a multi-stage structure to have an increasing separation distance downward from the lower tube plate (30) with an approach to the inside in a radial direction,
wherein the receiving part (63) is configured to receive combustion gas released from the flues and condensate generated from the combustion gas.

8. The shell-and-tube type heat exchanger (1) of claim 7, wherein the condensate receiver (60) further includes:
a support rod (87) vertically extending upward from the center of the receiving part (63), the support rod (87) being coupled to the lower tube plate (30) and formed of an elastic material.

9. The shell-and-tube type heat exchanger (1) of claim 7, wherein the condensate receiver (60) further includes:
a seating part (65) located outward of the receiving part (63) in the radial direction, wherein a radially outward area of the lower tube plate (30) is seated on the seating part (65).

## Patentansprüche

1. Ein Kondensatempfänger (60), umfassend:
ein Aufnahmeteil (63), das in einer kreisförmigen Form ausgebildet ist, wobei ein Auslass (41) eines Rauchzugs oberhalb des Aufnahmeteils (63) angeordnet ist, und das Aufnahmeteil (63) in einer mehrstufigen Struktur ausgebildet ist,
um einen zunehmenden Trennungsabstand nach unten von dem Auslass (41) des Rauchzugs mit einer Annäherung an das Innere in einer radialen Richtung zu haben, und Kondensat und Verbrennungsgas, das von dem Rauchzug ausgestoßen wird, aufnimmt; und einen Kondensatdurchlass (64), der sich von der Mitte des Aufnahmeteils (63) in radialer Richtung nach außen erstreckt,
wobei der Kondensatdurchlass (64) so konfiguriert ist, dass er die Innenseite des Aufnahmeteils (63) und die Außenseite des Aufnahmeteils (63) verbindet, um das Kondensat abzuleiten.

2. Der Kondensatempfänger (60) nach Anspruch 1, wobei der Aufnahmeteil (63) eine mehrstufige Struktur aufweist:
eine ringförmige Stufenaufnahmefläche (631) der ersten Stufe, die vom Auslass (41) des Rauchzugs nach unten beabstandet ist und auf die das Kondensat fällt und sich absetzt; und
eine zweite Stufenaufnahmefläche (632) in einer ringförmigen Form, die innerhalb der ersten Stufenaufnahmefläche (631) in der radialen Richtung so angeordnet ist, dass sie weiter von dem Auslass (41) des Rauchabzugs in einer unteren Richtung entfernt ist als die erste Stufenaufnahmefläche (631), wobei die zweite Stufenaufnahmefläche (632) von der ersten Stufenaufnahmefläche (631) umgeben ist und so angeordnet ist, dass sie die Kondensatdurchlass (64) umgibt.

3. Der Kondensatempfänger (60) nach Anspruch 2, wobei der Kondensatdurchlass (64) in radialer Richtung innerhalb der Stufenaufnahmefläche (632) der zweiten Stufe liegt und in einer Position angeordnet ist, die in der unteren Richtung weiter vom Auslass (41) des Rauchabzugs entfernt ist als die Stufenaufnahmefläche (632) der zweiten Stufe.

4. Der Kondensatempfänger (60) nach Anspruch 3, wobei die Stufenaufnahmefläche (631) der ersten Stufe und die Stufenaufnahmefläche (632) der zweiten Stufe in einer nicht geschlossenen Ringform ausgebildet sind, in der ein Bereich in einer Richtung, in der sich der Kondensatdurchlass (64) erstreckt, in einer abgeschnittenen Form ausgebildet ist.

5. Der Kondensatempfänger (60) nach Anspruch 1, der ferner umfasst:
ein Abflussloch (61), das an einem distalen Ende in einer Richtung angeordnet ist, in der sich der Kondensatdurchlass (64) erstreckt, wobei das Abflussloch (61) vertikal in einer unteren Richtung verbunden ist, so dass das Kondensat durch sein Gewicht abgeleitet wird; und
eine Abgasöffnung (62), die sich am distalen Ende in der Richtung befindet, in der sich der Kondensatdurchlass (64) erstreckt, wobei die Abgasöffnung (62) in einer Richtung verbunden ist, um das Verbrennungsgas freizugeben.

6. Der Kondensatempfänger (60) nach Anspruch 5, wobei die Abgasöffnung (62) zylinderförmig ausgebildet ist.

7. Ein Rohrbündelwärmetauscher (1), umfassend:
einen äußeren Behälter (10) mit Öffnungen an seinen gegenüberliegenden Enden und einem leeren Raum (14) darin, wobei der leere Raum (14) mit den Öffnungen an den gegenüberliegenden Enden verbunden ist;
eine Verbrennungskammer (20), die so konfiguriert ist, dass sie eine Öffnung an einem oberen Ende des äußeren Behälters (10) abdeckt und einen Innenraum (24) zur Unterbringung einer Wärmequelle bereitstellt;
eine untere Rohrplatte (30), die von der Verbrennungskammer (20) nach unten beabstandet und so konfiguriert ist, dass sie eine Öffnung an einem unteren Ende des Außenbehälters (10) abdeckt;
eine Vielzahl von Rauchabzügen, die in dem leeren Raum (14) des Außenbehälters (10) vorgesehen sind, um von der Wärmequelle erzeugtes Verbrennungsgas aus der Verbrennungskammer (20) zur Außenseite der unteren Rohrplatte (30) zu leiten; und
einen Kondensatempfänger (60) mit einem Aufnahmeteil (63), der in einer mehrstufigen Struktur ausgebildet ist, um einen zunehmenden Trennungsabstand nach unten von der unteren Rohrplatte (30) mit einer Annäherung an das Innere in einer radialen Richtung zu haben, wobei der Aufnahmeteil (63) so konfiguriert ist, dass er das aus den Rauchabzügen freigesetzte Verbrennungsgas und das aus dem Verbrennungsgas erzeugte Kondensat aufnimmt.

8. Der Rohrbündelwärmetauscher (1) nach Anspruch 7, wobei der Kondensatempfänger (60) weiterhin umfasst:
eine Stützstange (87), die sich von der Mitte des Aufnahmeteils (63) vertikal nach oben erstreckt, wobei die Stützstange (87) mit der unteren Rohrplatte (30) verbunden ist und aus einem elastischen Material besteht.

9. Der Rohrbündelwärmetauscher (1) nach Anspruch 7, wobei der Kondensatsammelbehälter (60) ferner umfasst:
ein Sitzteil (65), das in radialer Richtung außerhalb des Aufnahmeteils (63) angeordnet ist, wobei ein radial äußerer Bereich der unteren Rohrplatte (30) auf dem Sitzteil (65) sitzt.

## Revendications

1. Un récepteur de condensat (60) comprenant:
- une pièce de réception (63) de forme circulaire, sachant qu'une sortie (41) d'un conduit de fumée est disposée au-dessus de la pièce de réception (63), et la pièce de réception (63) est formée dans une structure à plusieurs étages pour avoir une distance de séparation croissante vers le bas à partir de la sortie (41) du conduit de fumée avec une approche vers l'intérieur dans une direction radiale et reçoit le condensat et le gaz de combustion libéré par le conduit de fumée ; et
- un passage de condensat (64) s'étendant vers l'extérieur à partir du centre de la pièce de réception (63) dans la direction radiale,
sachant que le passage de condensat (64) est configuré pour relier l'intérieur de la pièce de réception (63) et l'extérieur de la pièce de réception (63) afin d'évacuer le condensat.

2. Le récepteur de condensat (60) de la revendication 1, sachant que la pièce de réception (63) a la structure à plusieurs étages comprenant :
- une surface de réception du premier étage (631) de forme annulaire qui est espacée vers le bas de la sortie (41) du conduit de fumée et sur laquelle le condensat tombe et se dépose ; et
- une surface de réception du deuxième étage (632) de forme annulaire disposée vers l'intérieur de la surface de réception du premier étage (631) dans la direction radiale de manière à être située plus loin de la sortie (41) du conduit de fumée dans une direction inférieure que la surface de réception du premier étage (631), sachant que la surface de réception du deuxième étage (632) est entourée par la surface de réception du premier étage (631) et est disposée de manière à entourer le passage de condensat (64).

3. Le récepteur de condensat (60) de la revendication 2, sachant que le passage de condensat (64) est situé vers l'intérieur de la surface de réception du deuxième étage (632) dans la direction radiale et est disposé dans une position plus éloignée de la sortie (41) du conduit de fumée dans la direction inférieure que la surface de réception du deuxième étage (632).

4. Le récepteur de condensat (60) de la revendication 3, sachant que la surface de réception du premier étage (631) et la surface de réception du deuxième étage (632) sont formées dans une forme annulaire non fermée dans laquelle une zone dans une direction dans laquelle le passage de condensat (64) s'étend est formée dans une forme de coupe.

5. Le récepteur de condensat (60) de la revendication 1, comprenant en outre :
- un trou de drainage (61) situé à une extrémité distale dans une direction dans laquelle le passage de condensat (64) s'étend, le trou de drainage (61) étant relié verticalement dans une direction inférieure de manière à ce que le condensat soit drainé par le poids de celui-ci ; et
- un trou d'échappement (62) situé à l'extrémité distale dans la direction dans laquelle le passage de condensat (64) s'étend, le trou d'échappement (62) étant relié dans une direction pour libérer le gaz de combustion.

6. Le récepteur de condensat (60) de la revendication 5, sachant que le trou d'échappement (62) est de forme cylindrique.

7. Un échangeur de chaleur de type coque et tube (1) comprenant :
- un récipient extérieur (10) comportant des ouvertures à ses extrémités opposées et un espace vide (14) à l'intérieur, l'espace vide (14) étant relié aux ouvertures aux extrémités opposées ;
- une chambre de combustion (20) configurée pour couvrir une ouverture à une extrémité supérieure du récipient extérieur (10) et fournir un espace intérieur (24) pour localiser une source de chaleur ;
- une plaque tubulaire inférieure (30) espacée vers le bas de la chambre de combustion (20) et configurée pour couvrir une ouverture à une extrémité inférieure du récipient extérieur (10) ;
- une pluralité de conduits de fumée prévus dans l'espace vide (14) du récipient extérieur (10) pour guider le gaz de combustion généré par la source de chaleur de la chambre de combustion (20) vers l'extérieur de la plaque tubulaire inférieure (30) ; et
- un récepteur de condensat (60) comprenant une pièce de réception (63) formée dans une structure à plusieurs étages pour avoir une distance de séparation croissante vers le bas à partir de la plaque tubulaire inférieure (30) avec une approche vers l'intérieur dans une direction radiale,
sachant que la pièce de réception (63) est configurée pour recevoir le gaz de combustion libéré par les conduits de fumée et le condensat généré par le gaz de combustion.

8. L'échangeur de chaleur de type coque et tube (1) de la revendication 7, sachant que le récepteur de condensat (60) comprend en outre :
- une tige de support (87) s'étendant verticalement vers le haut à partir du centre de la pièce de réception (63), la tige de support (87) étant couplée à la plaque tubulaire inférieure (30) et formée d'un matériau élastique.

9. L'échangeur de chaleur de type coque et tube (1) de la revendication 7, sachant que le récepteur de condensat (60) comprend en outre :
- une partie d'assise (65) située à l'extérieur de la pièce de réception (63) dans la direction radiale, sachant qu'une zone radialement extérieure de la plaque tubulaire inférieure (30) est assise sur la partie d'assise (65).
